# EUROPÄISCHE PATENTSCHRIFT

(11) **EP 2 155 587 B1**
(45) Veröffentlichungstag und Bekanntmachung des Hinweises auf die Patenterteilung: **14.11.2012**
(21) Anmeldenummer: 08773427.3
(22) Anmeldetag: 13.06.2008
(51) Int. Cl.: B65G 47/244, B65G 47/252, B65G 1/00

(54) **KIPP- UND DREHSTATION FÜR KOMMISSIONIERANLAGEN**
TILT AND ROTATION STATION FOR A PICKING INSTALLATIONS
POSTE DE BASCULEMENT ET POSTE DE ROTATION POUR INSTALLATIONS DE PRÉPARATION DE COMMANDES

(30) Priorität: 13.06.2007 DE 102007027864
(43) Veröffentlichungstag der Anmeldung: 24.02.2010
(73) Patentinhaber: SSI Schäfer Noell Gmbh, 97232 Giebelstadt (DE)
(72) Erfinder: SCHAEFER, Gerhard, 57290 Neunkirchen (DE)
(74) Vertreter: Witte, Weller & Partner
(86) Internationale Anmeldenummer: PCT/EP2008/004756
(87) Internationale Veröffentlichungsnummer: WO 2008/151812

(56) Entgegenhaltungen:
- EP-A- 0 615 929
- DE-A1- 10 313 576
- DE-B- 1 243 572
- DE-C1- 4 037 593
- JP-A- 58 139 926

## Beschreibung

Die vorliegende Erfindung betrifft ein automatisiertes System zum Packen eines Artikels auf einen Versandträger gemäß dem Oberbegriff des Anspruchs 1.

Die Erfindung betrifft ferner ein Verfahren zum Packen eines Artikels auf einen Versandträger gemäß dem Oberbegriff des Anspruchs 12.

Aus der DE 1243 572 B1 ist ein System zum Packen eines Artikels auf einem Versandträger und ein Verfahren zum Packen eines Artikels auf einen Versandträger gemäß dem Oberbegriff der Ansprüche 1 und 12 bekannt.

Es sind vielfältige Systeme zum automatisierten Packen von Artikeln bekannt, wobei die Packungseinheiten üblicherweise quaderförmig sind (z.B. Milchsteige, Getränkekiste, mit PVC-Folie verschweißte PET-Flaschen, usw.). Dazu wurden verschiedene Greifroboter entwickelt, die sich translatorisch in allen drei Raumrichtungen bewegen können, wobei üblicherweise auch eine Rotationsbewegung um jede Raumachse möglich ist. Dazu sind die Greifroboter mit entsprechend vielen Aktuatoren versehen, die alle von einer übergeordneten Steuereinrichtung angesteuert werden müssen.

Üblicherweise "wissen" die Greifroboter, mit welcher Orientierung ein zu greifender Artikel präsentiert wird. Liegt diese Information nicht vor, so verfügen einige Greifroboter über zusätzliche Erfassungsmittel, wie z.B. eine integrierte Videokamera, um ein Bild des präsentierten Artikels aufnehmen zu können, basierend auf dem dann die verschiedenen Bewegungsvorgänge berechnet werden, um den Artikel in einer gewünschten Lage bzw. Orientierung abzusetzen. Dies erfordert natürlich einen hohen Rechenaufwand und führt zu einer Verlangsamung des Gesamtvorgangs, da der vom Greifroboter durchzuführende Bewegungsvorgang vorab berechnet werden muss. Der Greifroboter stellt somit eine Art "Flaschenhals" dar.

Dies macht sich insbesondere in Kommissionieranlagen bemerkbar, die mit hohen Leistungen, z.B. 7500 Artikeleinheiten pro Stunde, betrieben werden. In solchen Hochleistungsanlagen werden Artikel über eine Fördertechnik aus einem Artikellager zum Greifroboter transportiert, damit dieser die Artikel auf einen Versandträger, wie z.B. eine Europalette, lädt.

Es gibt auch Ansätze, dass die Artikel bereits in einer vorbestimmten Lage zu einem Verladeroboter hin transportiert werden, damit dieser den Artikel lediglich greifen muss, um ihn auf den Versandträger zu laden. Dabei werden Kippvorrichtungen und Drehvorrichtungen eingesetzt, um die Artikel vorab auszurichten.

Ein solches System und Verfahren ist in der DE 103 13 576 B4 offenbart. Dort werden Artikel, bevor sie zu einem Verladeroboter gebracht werden, mit Hilfe einer Kippvorrichtung und einer Drehvorrichtung in eine vorbestimmte Lage gebracht. Der Verladeroboter ähnelt einem Tortenheber, der unter den zu verladenden Artikel gefahren wird, der den Artikel anhebt, um ihn in Richtung des Versandträgers zu transportieren und der den Artikel anschließend vom "Tortenheber" herunterschiebt, um den Artikel auf dem Versandträger zu positionieren. Dabei werden die Artikel auf Tablaren zum Verladeroboter transportiert. Die Tablare weisen eine Vielzahl von Löchern in ihrem Boden auf, so dass auf den Tablaren befindliche Artikel mittels durch die Löcher greifende Hubstifte gekippt werden können (Kippstation). In der Drehvorrichtung werden die Tablare um 90°, 180°, oder 270° gedreht. Ferner werden sogenannte Rütteleinrichtungen benötigt, um die Artikel in eine vorbestimmte Ecke des Tablars zu bringen. Das Kippen und Drehen erfolgt während sich der Artikel noch auf dem Tablar befindet.

Weitere allgemeine Systeme sind in den Dokumenten DE 1 243 572 B, DE 29 49 627 A1, DE 40 37 593 C1, DE 35 23 288 A1, DE 692 02 141 T2 sowie DE 10 2004 012 043 A1 gezeigt.

Es ist eine Aufgabe der vorliegenden Erfindung, ein verbessertes System und Verfahren vorzusehen, mit dem Artikel automatisiert auf einen Versandträger geladen werden können, wobei die Artikel chaotisch angeliefert und auf eine vorbestimmte Seite gestellt werden müssen. Insbesondere wird als Randbedingung vorgegeben, dass ein Packroboter die Artikel, die ihm präsentiert werden, selbst nicht kippen kann.

Gelöst wird die Aufgabe durch ein System gemäß Anspruch 1.

Mit einer derartigen Anordnung ist es möglich, dass dem Packroboter Artikel bereits in der gewünschten Orientierung präsentiert werden, und zwar bevor sie den Packroboter erreichen. Artikel werden auf der Förderstrecke zum Packroboter transportiert. Zum Zeitpunkt des Aufnehmens des präsentierten Artikels durch den Packroboter müssen keine Berechnungen mehr durchgeführt werden, um festzustellen, wie der Artikel zu drehen bzw. zu bewegen ist, um ihn auf seine gewünschte Standfläche stellen zu können. Der Artikel steht vorzugsweise bereits auf seiner Standfläche, wenn er dem Packroboter zur Abholung präsentiert wird. Der mit dem Ausrichten des Artikels verbundene Arbeitsaufwand liegt zeitlich vor dem Präsentieren des Artikels. Es ist möglich, den Artikel in jede beliebige Lage zu bringen, so dass der Packroboter ihn lediglich abholen muss und keine weiteren Kippbewegungen mehr durchführen muss.

Ferner kann auf diese Weise lageoptimiert gepackt werden, d.h. ein präsentierter Artikel kann bereits vorab so gedreht werden, dass er genau in ein "Loch" im zu packenden Artikelstapel auf den Versandträger passt.

Gemäß einer bevorzugten Ausführungsform weist die Kippfläche an einem stromaufwärts gelegenen Ende der Kippfläche eine Kippachse auf, die parallel zu einem stromabwärts gelegenen Übergabeende der Förderstrecke orientiert ist und die sich insbesondere an das Übergabeende anschließt.

Somit ist gewährleistet, dass Artikel direkt von der Förderstrecke kommend präsentiert werden. Eine Übergabe an einen speziellen Aufnahmeort für den Packroboter ist nicht erforderlich. Der Artikel "fließt" somit bis zu dem Ort, wo er dem Packroboter präsentiert wird.

Mit dem Anschlag ist jederzeit gewährleistet, dass die Artikel immer auf einer konstanten Höhe präsentiert werden. Der Anschlag dient zum einen als Anschlag für Artikel, die von der Förderstrecke kommen, und zum anderen als Standfläche, wenn sich die Kippstation in ihrer Kippstellung befindet.

In diesem Fall kämmt die Greifeinrichtung z.B. mit dem Anschlag. Die Artikelübergabe erfolgt durch einfaches Anheben. Ein Vorsehen von Saugvorrichtungen, wie im Stand der Technik beispielsweise vorgesehen, ist hier nicht erforderlich. Die Kräfte, die aufgewendet werden müssen, um die Artikel am bzw. in der Greifeinrichtung zu halten, sind minimal, da die Schwerkraft ausgenutzt wird, um die Artikel zu fixieren.

Auch ist es von Vorteil, wenn die Kippfläche wenigstens eine an die Greifeinrichtung angepasste Aussparung aufweist.

In diesem Fall bilden Anschlag und Kippfläche eine Art Rechen, der mit einer entsprechend geformten rechenförmigen Greifeinrichtung des Packroboters zusammenwirken kann. So ist sichergestellt, dass ein vom Packroboter gegriffener Artikel nochmals an die Kippstation abgegeben werden kann, um den Körper ein weiteres Mal zu kippen. Dazu wird die Kippstation in ihre Aufnahmestellung gebracht, bevor der gegriffene Artikel vom Packroboter an die Packstation zurückgegeben wird. Anschließend wird die Kippstation erneut in die Kippstellung gebracht, so dass der Artikel ein weiteres Mal gekippt wird. Auf diese Weise ist es möglich, dass Artikel auf die Seite des Artikels gestellt werden können, die man in der Draufsicht auf die Förderstrecke sieht, wenn die Artikel auf der Förderstrecke transportiert werden.

Gemäß einer weiteren Ausgestaltung kämmt die wenigstens eine Aussparung mit der Greifeinrichtung.

Ferner ist es von Vorzug, wenn die Kippstation eine Hub- und Senkeinrichtung, insbesondere einen elektrisch oder hydraulisch betriebenen Zylinder, umfasst.

So kann die Kippfläche zwischen der Aufnahmestellung und der Kippstellung hin- und herbewegt werden.

Gemäß einer weiteren besonderen Ausgestaltung weist die Drehfläche in der Aufnahmestellung an ihrem stromabwärts gelegenen Ende einen Anschlag auf.

Dieser Anschlag dient zum Stoppen der Artikel an einer vordefinierten Position, insbesondere wenn die Artikel mit einer relativ hohen Geschwindigkeit von der Förderstrecke an die Drehstation abgegeben werden.

Insbesondere kann der Anschlag gegenüber der Drehfläche abgesenkt werden.

Dies kann von Nutzen sein, wenn der Artikel z.B. nicht gedreht werden muss. In diesem Falle kann der Anschlag abgesenkt werden und der Artikel wird, ohne gedreht zu werden, durchgeleitet. Wäre der Anschlag nicht absenkbar, müsste die Drehstation aus ihrer Aufnahmestellung in eine seitliche Drehstellung verdreht werden, damit der Anschlag einem Weitertransport des Artikels nicht im Wege steht.

Auch ist es von Vorteil, wenn die Drehfläche gegenüber der Ebene der Förderstrecke angehoben und abgesenkt werden kann.

Auf diese Weise kann der Artikel bereits ein erstes Mal gekippt werden.

Gemäß einer weiteren besonderen Ausgestaltung umfasst die Drehstation Fördermittel, um einen auf der Drehfläche befindlichen Artikel nach erfolgter Drehung an einen stromabwärts gelegenen Teil der Förderstrecke oder direkt an die Kippstation zu übergeben.

Insbesondere weist das System eine Überwachungseinrichtung auf, die stromaufwärts relativ zur Drehstation angeordnet ist.

Mit dieser Überwachungseinrichtung kann die Lage eines zu packenden Artikels erfasst werden und an einen übergeordneten Steuerungsrechner, insbesondere an einen Lagerverwaltungsrechner, übermittelt werden. Der Lagerverwaltungsrechner berechnet dann anhand der erfassten Lage entsprechende Dreh- und/oder Kippvorgänge, um den Artikel auf seiner vordefinierten Stellfläche zu präsentieren. Der Packroboter greift den so ausgerichteten Artikel dann und stellt ihn auf den Versandträger.

Eine Pack-Software errechnet (vorab) die ideale und mögliche Standfläche, Orientierung bzw. Lage des Artikels auf dem Versandträger. Die Artikel können somit individuell, d.h. beliebig orientiert, angeliefert werden und immer in die ideale Position bzw. Lage gebracht werden. Die Pack-Software ist beim Planen des Packvorgangs vollkommen frei, den Artikel auf eine beliebige Seite zu stellen, so dass der Artikel optimal in den bereits auf der Palette befindlichen Artikelstapel passt. Dies erhöht die Freiheitsgrade bevor gepackt wird, d.h. während der Kommissionierung. Die Volumenausnutzung auf dem Versandträger wird optimiert. Eine "verzahnte" Schichtung der Artikel auf dem Versandträger wird ermöglicht. Artikel, die während eines Transports zur Packstation (auf der Förderstrecke) umgekippt sind oder sich verdreht haben, können wieder ausgerichtet werden, wie gewünscht bzw, geplant. Sollten Menschen beim Packvorgang (unterstützend) eingesetzt werden, können die Artikel ergonomisch angeliefert werden, d.h. derart, dass ein Mensch die Artikel besser greifen kann.

Ferner ist es von Vorteil, wenn die Drehstation und die Kippstation getrennt voneinander angeordnet sind.

Hier kommt es zu einer Entkupplung von Drehvorgängen und Kippvorgängen. Mehrere Artikel können gleichzeitig gedreht und gekippt werden.

Weitere allgemeine Vorteile sind darin zu sehen, dass instabile Artikel liegend transportiert werden können, bevor sie anschließend gepackt werden. Dies erhöht die Kippsicherheit während des Transports durch die Kommissionieranlage. Dies resultiert in weniger Ausschuss.

Die Versandträger können geschlichtet werden. Auf dem Versandträger können druckstabile Lagen gebildet werden, wobei insbesondere Lücken vermieden bzw. gefüllt werden.

Die oben genannte Aufgabe wird ferner gemäß dem eingangs erwähnten Verfahren gelöst, wobei das Verfahren die Schritte des Ansprüchs 12 aufweist.

Die Drehung der Artikel folgt insbesondere stromaufwärts relativ zur Kippstation. Dreh- und Kippbewegung erfolgt bevor der Artikel dem Packroboter präsentiert wird. Alle Berechnungen, die zur richtigen Orientierung des Artikels erforderlich sind, erfolgen bereits bevor der Artikel dem Packroboter präsentiert wird. Vorzugsweise sind Drehstation und Kippstation in unmittelbarer Nähe zur Packstation angeordnet, so dass ein Artikelfluss bis zur Packstation, die in der Regel die letzte Station eines Artikels vor seinem Versand darstellt, nahezu ungestört bleibt.

Ferner ist es erfindungsgemäß, wenn der Schritt des Aufnehmens umfasst: Untergreifen eines Anschlags der Kippfläche, der zumindest eine Aussparung aufweist, mit einer Greifeinrichtung des Packroboters, die mit der Aussparung kämmt; und Anheben der Greifeinrichtung, um den Artikel mit aufzunehmen und auf dem Versandträger abzusetzen.

Wie bereits oben erwähnt, wird hier die Schwerkraft ausgenutzt, um den Artikel auf der Greifeinrichtung des Packroboters zu fixieren.

Insbesondere weist das Verfahren die folgenden Schritte auf: Zurückkippen der Kippfläche in die Aufnahmestellung; Abgeben des Artikels von der Greifeinrichtung an die zurückgekippte Kippfläche; dann erneutes Kippen der Kippfläche; und dann erneutes Aufnehmen des Artikels mit der Greifeinrichtung.

Auf diese Weise kann ein weiterer Kippvorgang vorgesehen werden, ohne eine weitere zusätzliche Kippvorrichtung vorsehen zu müssen. Diese Vorgehensweise kann insbesondere dann eingesetzt werden, wenn ein Artikel im Vergleich zu seiner ursprünglichen Orientierung auf der Förderstrecke um 180° von seiner Unterseite auf seine Oberseite gestellt werden muss.

Ferner ist es bevorzugt, wenn die Drehfläche gegenüber der Ebene der Fördertechnik abgesenkt wird und dann wieder auf die Ebene der Fördertechnik angehoben wird.

Auf diese Weise kann der Artikel alternativ ein weiteres Mal gekippt werden.

Gemäß einer weiteren Ausführungsform wird die Orientierung des Artikels auf der Fördertechnik erfasst und an eine übergeordnete Steuereinrichtung übertragen.

Auf diese Weise kann ermittelt werden, wie der Körper zu drehen und zu kippen ist, um ihm auf seine Standfläche präsentieren zu können.

Weiter ist es von Vorteil, wenn die Orientierung des Artikels auf der Fördertechnik erfasst und an eine übergeordnetes Steuereinrichtung übertragen wird, um einen Drehvorgang zu ermitteln, so dass der Artikel auf der vorgegebenen Seite auf den Versandträger gestellt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht eines System gemäß der vorliegenden Erfindung;
- Fig. 2A-2D: perspektivische Detailansichten einer Drehstation zu verschiedenen Zeitpunkten;
- Fig. 3A-3C: perspektivische Detaildarstellungen einer Kippstation zu verschiedenen Zeitpunkten;
- Fig. 4A-4E: Seitenansichten der Kippstation der Fig. 3, die mit einem Packroboter zusammenwirkt;
- Fig. 5A-5C: eine Abwandlung der Drehstation der Fig. 2 zu verschiedenen Zeitpunkten; und
- Fig. 6: ein schematisches Flussdiagramm des erfindungsgemäßen Verfahrens.

Bei der nachfolgenden Beschreibung der Figuren werden gleiche Elemente mit den gleichen Bezugsziffern bezeichnet werden. Sollte es Abwandlungen von bestimmten Merkmalen geben, so wird dies explizit erläutert werden. Ein System gemäß der vorliegenden Erfindung wird nachfolgend allgemein mit 10 bezeichnet werden.

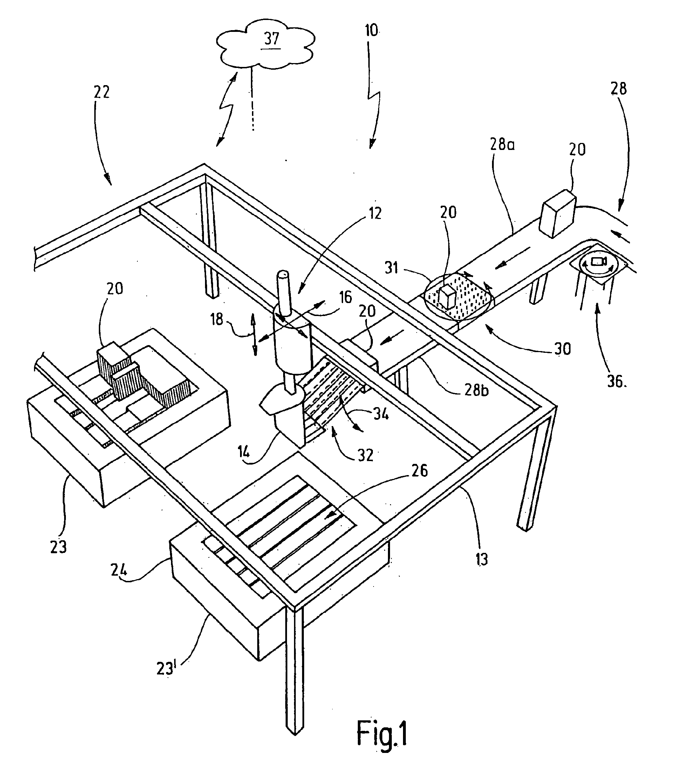

Bezugnehmend auf Fig. 1 ist ein System zum Packen von Artikeln mit einer vorbestimmten Lage, d.h. auf einer vorgegebenen Standfläche, vorgesehen.

Das System 10 umfasst einen Greifroboter 12, der hier z.B. an einem Gestell 13 mittels eines nicht näher bezeichneten Fahrbalkens bewegt wird. An einem unteren Ende weist der Packroboter 12 eine Greifeinrichtung 14 auf, die insbesondere rechenförmig ausgebildet ist. Der Packroboter 12 ist in einer horizontalen Ebene nach vorn und hinten und nach links und rechts beweglich. Dies ist in Fig. 1 mit einem aus Doppelpfeilen bestehenden Kreuz 16 angedeutet. Der Packroboter 12 bzw. seine Greifeinrichtung 14 ist auch in vertikaler Richtung beweglich, wie es durch einen Doppelpfeil 18 angedeutet ist. Er kann jedoch keine Kippbewegungen ausführen.

Mit der Greifeinrichtung 14 werden Artikel 20 innerhalb einer Packstation 22, die den Packroboter 12 umfasst, zu Packplätzen 23, 23' verbracht. Die Packplätze 23, 23' umfassen rahmenartige Gebilde 24, die einen Versandträger 26, wie z.B. eine Europalette, nahezu vollständig umgeben, um als Stapelhilfe zu dienen. Der Versandträger 26 wird schichtweise mit Artikeln 20 beladen. Sobald eine Schicht beladen ist, wird er in vertikaler Richtung um die beladene Schicht nach unten (nicht dargestellt) abgesenkt. Unterhalb der Packebene können weitere Vorrichtungen, wie z.B. eine Wickelmaschine vorgesehen sein, um den so auf den Versandträger 26 gepackten Stapel mit einer Folie stützend zu umwickeln.

In Fig. 1 sind exemplarisch zwei Packplätze 23, 23' gezeigt. Das Vorsehen von mehreren Packplätzen ist von Vorteil, um die Zeit besser auszunutzen, die erforderlich ist, um einen bepackten Versandträger 26 auszutauschen. In Fig. 1 ist der links oben dargestellte Packplatz gerade in Bearbeitung, d.h. der Packroboter 12 belädt diesen Packplatz mit Artikeln 12. Der untere Packplatz 23' enthält einen leeren Versandträger 26 und kann simultan oder nach Abschluss des Packvorgangs am ersten Packplatz 23 beladen bzw. bepackt werden.

Die Artikel 20 werden mittels einer Fördertechnik 28 in den Bereich der Packstation 22 transportiert. Die Fördertechnik 28 wird durch eine Drehvorrichtung 30 in einen ersten stromaufwärts gelegenen Abschnitt 28a und einen zweiten stromabwärts gelegenen Abschnitt 28b unterteilt. Die Transportrichtung der Artikel 20 auf der Fördertechnik 28 ist durch schwarze Pfeile angedeutet. An ihrem stromabwärts gelegenen Ende weist die Förderstrecke 28 bzw. der untere Abschnitt 28b eine Kippvorrichtung 32 auf. Bei der Fördertechnik 28 kann es sich z.B. um ein endlos umlaufendes Gurtband oder einen Rollenförderer handeln, die üblicherweise auf einem hüfthohen Gestell angeordnet sind.

Mit der Drehvorrichtung 30 lassen sich die Artikel 20 um einen beliebigen Winkel, vorzugsweise um ein Vielfaches von 90°, um eine Drehachse (nicht gezeigt) drehen, die im Wesentlichen senkrecht zu einer Ebene der Förderstrecke 28 orientiert ist.

Mit der Kippstation 34 lassen sich Artikel aus der Ebene der Fördertechnik 28, d.h. üblicherweise aus der Horizontalen, in die Vertikale kippen, und zwar um eine Achse, die vorzugsweise parallel zum stromabwärts gelegenen Ende der Fördertechnik 28 orientiert ist. Die Kipprichtung ist mit einem Doppelpfeil 34 in Fig. 1 angedeutet.

Ferner kann das System 10 eine Überwachungseinrichtung 36, wie z.B. eine geeignete Kamera mit entsprechender Auflösung, aufweisen, um die Orientierung der Artikel 20 relativ zur Förderstrecke 28 zu erfassen, sollte die Orientierung nicht bereits vorab bekannt sein. Wird die relative Orientierung mittels der Überwachungseinrichtung 36 erfasst, so wird diese Information an eine übergeordnete Steuerungseinrichtung 37, wie z.B. einen Lagerverwaltungsrechner, übermittelt. Die Datenübermittlung kann entweder über ein Bussystem oder drahtlos erfolgen, wie es im Bereich der Steuereinrichtung 37 durch eine durchgezogene Linie bzw. ein Doppelpfeil angedeutet ist.

Die Steuereinrichtung 37 ist auch für die Betätigung der Drehstation 30, der Kippstation 34 sowie des Packroboters 12 verantwortlich.

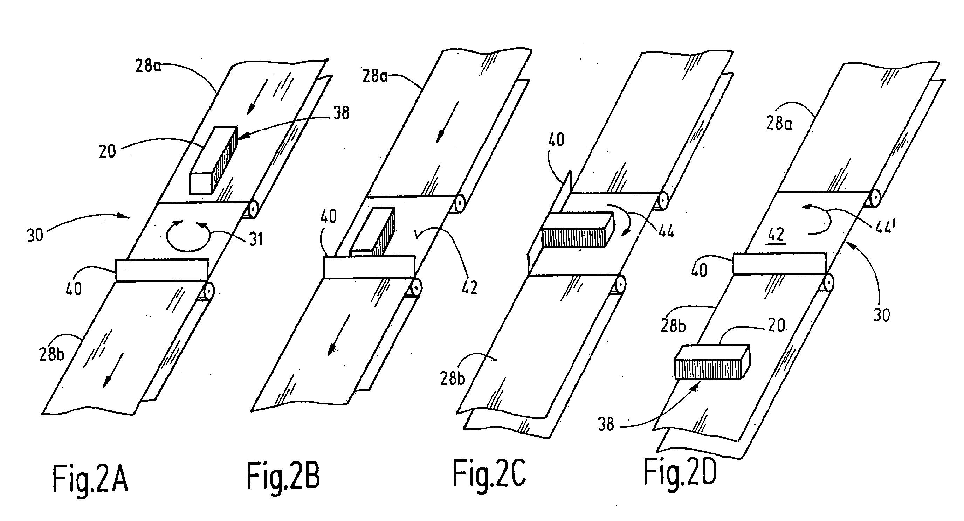

Bezug nehmend auf Fig. 2 bis 4 wird nachfolgend ein Vorgang zum Drehen und Kippen von Artikeln näher beschrieben werden.

In den Fig. 2A bis 2D ist der Bereich der Fördertechnik 28 der Fig. 1 isoliert dargestellt, der die Drehvorrichtung 30 enthält.

Über den ersten Förderstreckenabschnitt 28a wird ein Artikel 20 stromabwärts in Richtung der Drehstation 30 befördert, um dort in eine vorgewünschte Stellung gedreht (Pfeil 31) zu werden, falls dies erforderlich ist.

Die Kippstation 30 weist einen Anschlag 40 auf, der sich aus der Ebene der Fördertechnik 28 erhebt. Der Anschlag 40 dient zum Anhalten des Artikels 20, wenn der Artikel 20 vom Förderstreckenabschnitt 28a mit einer gewissen kinetischen Energie, und vorzugsweise aufgrund von Trägheit, an die Drehstation 30 abgegeben wird. Der Anschlag kann mit einer Drehfläche 42 verbunden sein oder alternativ getrennt zur Drehfläche 42 angeordnet werden. Eine getrennte Anordnung zeichnet sich dadurch aus, dass die Drehfläche nach erfolgter Drehung eines ersten Artikels nicht zwingend zurückgedreht werden muss, um einen zweitem, zu drehenden Artikel aufzunehmen. Um in diesem Fall den ersten Artikel von der Drehfläche abzutransportieren, wird der Anschlag abgesenkt. Anschließend wird er wieder angehoben, jedoch ohne die Drehfläche zurückzudrehen. Dann kann der zweite Artikel auf die Drehfläche gefördert werden.

Hier und in den nachfolgenden Zeichnungen ist eine Seite bzw. Oberfläche 38 des Körpers 20 dunkel dargestellt. Die dunkel dargestellte Seite 38 stellt die Stand- bzw. Stellfläche des Artikels 20 dar. Auf diese Seite soll der Artikel 20 später auf den Versandträger 26 (vergleiche Fig. 1) mittels dem Packroboter 12 bzw. dessen Greifeinrichtung 14 gestellt werden.

In Fig. 2B ist die Situation gezeigt, in der sich der Artikel 20 vollständig auf einer Drehfläche 42 befindet. Der Artikel 20 wurde durch den Anschlag 40 gebremst.

In Fig. 2C ist zu erkennen, dass die Drehstation 30 um 90° im Uhrzeigersinn gedreht wurde. Die Standfläche 38 ist nun in Richtung des abwärts gelegenen Endes des zweiten Förderstreckenabschnitts 28b orientiert. Es versteht sich, dass um beliebige Winkel gedreht werden kann.

In Fig. 2D hat die Übergabe des Artikels 20 von der Drehstation 30 an den Förderstreckenabschnitt 28b bereits stattgefunden. Die Drehstation 30 weist dazu vorzugsweise separate Fördermittel (nicht dargestellt) auf, um den Artikel übergeben zu können.

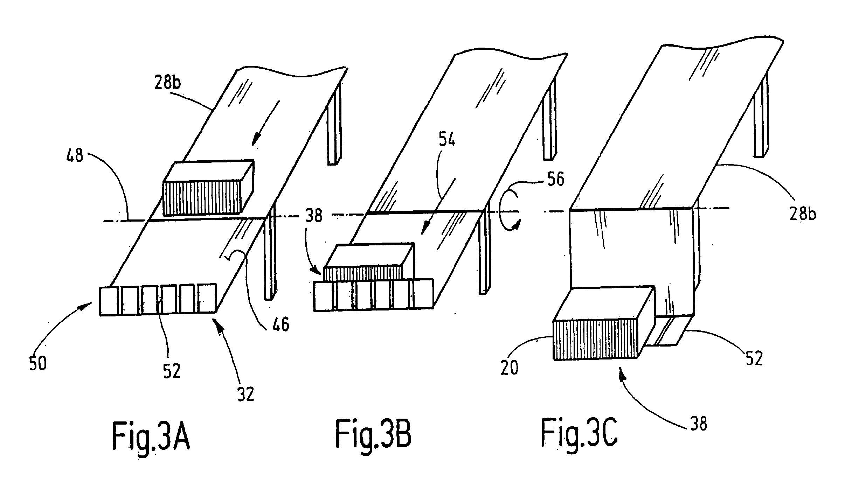

Bezug nehmend auf Fig. 3A bis 3C wird ein Kippvorgang beschrieben werden.

Fig. 3A schließt an Fig. 2D an und zeigt eine Situation, in der der Artikel 20 der Fig. 2 an ein stromabwärts gelegenes Ende des Förderstreckenabschnitts 28b transportiert wurde. Dort ist die Kippstation 32 angeordnet.

Die Kippstation 32 umfasst eine hier schematisch dargestellte Kippfläche 46, die an ihrem stromaufwärts gelegenen Ende drehbar um eine Kippachse 48 an der Fördertechnik 28b gelagert ist. An einem stromabwärts gelegenen Ende der Kippfläche 46 ist wiederum ein Anschlag 50 bestehend aus einer Vielzahl z.B. von rechenförmig angeordneten Zacken 52 vorgesehen.

In Fig. 3B ist die Situation dargestellt, wenn der Artikel 20 bereits an die Kippstation 32 abgegeben wurde.

Der Artikel 20 schlägt mit seiner Standfläche 38 an den Anschlag 50 an. Die Kippstation 32 muss dazu nicht zwingend über eigene Fördermittel, wie z.B. angetriebene Rollen oder Riemen, verfügen. Wenn die kinetische Energie des Artikels 20 ausreichend groß ist, wenn er von der Förderstrecke 28b kommt, kann der Artikel 20 ohne weitere Energiezuführung bis zum stromabwärts gelegenen Anschlag 50 gleiten. Dabei ist es von Vorteil, wenn die Oberfläche der Kippfläche 46 mit einer Substanz versehen ist, die einen entsprechend niedrigen Reibungskoeffizienten aufweist. In den Fig. 3A und 3B ist die Kippstation 32 in ihrer Aufnahmestellung gezeigt. Dabei ist die Kippfläche 46 vorzugsweise parallel zur Ebene der Förderstrecke 28b angeordnet, d.h. die Kippfläche 46 und die Fördertechnik 28b liegen im Wesentlichen in der gleichen Ebene. Die Kippfläche 46 könnte jedoch alternativ leicht in Richtung der Vertikalen abgekippt sein, um die Bewegung eines Artikels 20 bei einer Übergabe von der Fördertechnik 28b aufgrund von Schwerkraft zu unterstützen. Die Kippfläche 46 könnte z.B. mit Gleitrollen versehen sein.

Sobald der Artikel 20 von der Fördertechnik 28b an die Kippstation 32 übergeben wurde (schematisch angedeutet durch einen Pfeil 54) kann die Kippfläche 46 um ihre Kippachse 48 gedreht werden, wie es schematisch durch einen Pfeil 56 angedeutet ist.

Es versteht sich, dass optional auch seitliche Ausrichtungseinrichtungen vorgesehen werden können, um den Artikel 20 am linken oder rechten Rand der Förderstrecke 28 auszurichten.

In Fig. 3C ist die Situation dargestellt, in der die Kippvorrichtung 32 in ihre Kippstellung verbracht wurde.

In der Kippstellung ist die Kippfläche 46 nahezu vollständig in der Vertikalen. Die Standfläche 38 ist in der Fig. 3C nicht mehr zu sehen. Der Artikel 20 steht auf seiner Standfläche 38 auf den Zacken 52. Der Artikel 20 ist somit zur Abholung durch den Packroboter 12 bereit. Vorzugsweise steht der Packroboter 12 dann bereits in seiner Aufnahmestellung, damit der Artikel 20 nicht von der Kippfläche 46 fallen kann. Dies kann es erforderlich machen, dass sich der Roboter 12 synchron zur Kippstation 32 bewegt, wobei der Anschlag 50 der Kippfläche 46 mit der Greifeinrichtung 14 kämmt.

Kippt man die Fläche 46 jedoch aufwärts, wie es nachfolgend noch näher beschrieben werden wird, reicht es aus, dass er Roboter 12 in seiner Aufnahmestellung wartet.

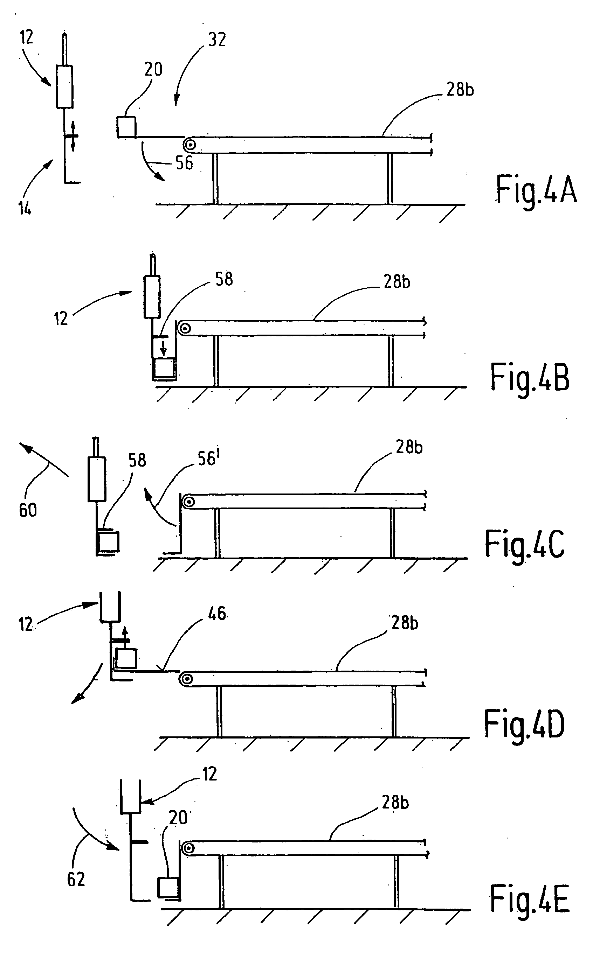

Ein Abholvorgang wird nachfolgend unter Bezugnahme auf die Fig. 4A bis 4E erläutert werden. In den Fig. 4A bis 4E ist der Förderstreckenabschnitt 28b sowie die Kippstation 32 und der Packroboter 12 in schematischen Seitenansichten dargestellt. Fig. 4A entspricht dabei der Darstellung der Fig. 3B. Fig. 4B entspricht der Fig. 3C.

In den Fig. 4A und 4B ist zusätzlich der Packroboter 12 und dessen Bewegung relativ zur Kippvorrichtung 32 gezeigt. Der Packroboter 12 bzw. dessen Greifeinrichtung 14 umfasst ein höhenverstellbares Fixierungselement 58.

Die Greifeinrichtung 14 weist einen im Wesentlichen L-förmigen Querschnitt auf und ist entsprechend zur Form des Anschlags 50 so ausgebildet, dass sie in die Hohlräume zwischen den Zacken 52 des Anschlags 50 der Kippstation 32 greift.

Sobald die Greifeinrichtung 14 in die Aussparungen zwischen den Zacken 52 (vergleiche Fig. 3A) eingefahren ist (vergleiche Fig. 4B), wird das Fixierelement 58 abgesenkt, um den Artikel 20 einzuklemmen.

Anschließend kann der Packroboter 12 zu den Packplätzen 23, 23' wegbewegt werden. Dies ist in Fig. 4C schematisch mit einem Pfeil 60 angedeutet.

Anschließend oder simultan kann die Kippstation aus ihrer Kippstellung bereits wieder in die Aufnahmestellung zurückgekippt werden, wie es durch eine Pfeil 56' angedeutet ist.

Sollte es erforderlich sein, dass der Artikel 20 erneut gekippt werden muss, bevor er zum Versandträger 26 transportiert werden kann, so könnte dieser zusätzliche Kippvorgang durch ein Zusammenwirken des Packroboters 12 mit der Kippstation 32 erfolgen. Dies ist nachfolgend in den Fig. 4D und 4E gezeigt.

Ein erneutes Kippen kann z.B. dann erforderlich sein, wenn der Artikel 20 ursprünglich auf dem Kopf stehend über die Förderstrecke 28 zur Drehstation 30 bzw. Kippstation 32 befördert wird. Dann muss der Artikel zweimal um 90° gekippt werden.

Wie in Fig. 4D gezeigt, kann der gegriffene Artikel 20 (vergleiche Fig. 4C) vom Packroboter 12 erneut an die Kippfläche 46 der Kippstation 32 abgegeben werden. Die Kippfläche 46 ist dazu z.B. ebenfalls rechenförmig ausgebildet, d.h. die Kippfläche 46 weist Aussparungen auf, die es der Greifeinrichtung 14 des Packroboters 12 ermöglichen, durch sie hindurchzugreifen und den Artikel 20 wieder an die Kippstation 32 abzugeben. Es versteht sich, dass das Fixierelement 58 dazu entsprechend zu bewegen ist.

Sobald der Artikel 20 erneut auf der Kippfläche 46 abgestellt wurde, kann der Kippvorgang, wie bereits zuvor erläutert, nochmals durchgeführt werden, um den Artikel 20 nochmals zu kippen. Auf eine Wiederholung der Beschreibung des erneuten Kippvorgangs wird verzichtet, da dieser gleich zu dem zuvor beschriebenen verläuft.

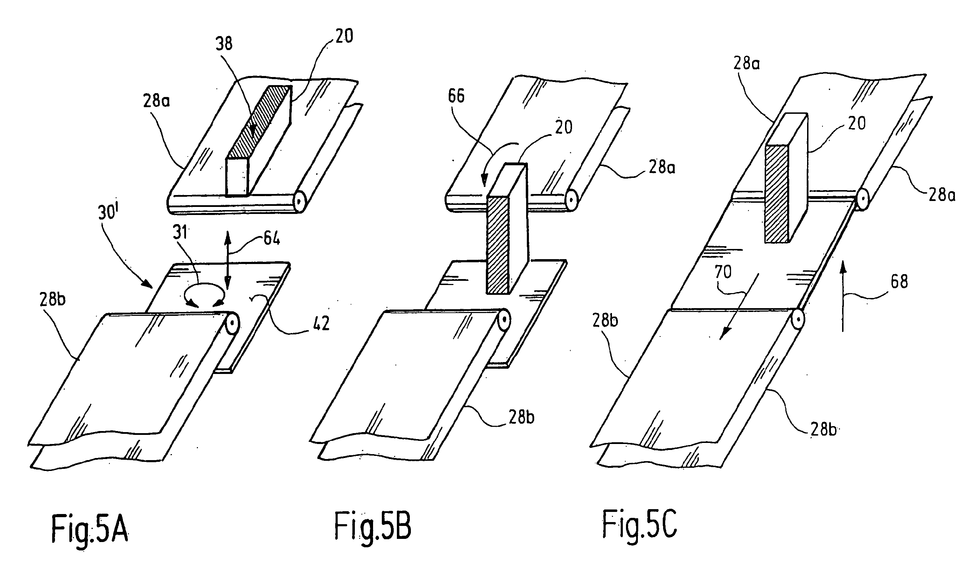

Eine weitere Alternative, um einen Artikel 20 erneut zu kippen, ist in den Fig. 5A bis 5C dargestellt.

In den Fig. 5A bis 5C ist eine Drehstation 30' ähnlich der Fig. 2 dargestellt, wobei die Drehstation 30' hier zusätzlich für die Fähigkeit verfügt, angehoben und abgesenkt zu werden, was durch einen Doppelpfeil 64 angedeutet ist.

Bezug nehmend auf Fig. 5A wird ein Artikel 20 "auf dem Kopf stehend" angeliefert. Die Drehfläche 42 kann bereits leicht gegenüber der Förderstrecke 28a abgesenkt sein. Die Förderstrecke 28a fördert den Artikel 20 über ihr stromabwärts gelegenes Ende hinaus, so dass der Artikel 20 in Richtung der bereits abgesenkten Drehfläche 42 abkippt.

Es versteht sich, dass die Abkippbewegung des Artikels 20 mit der Absenkbewegung der Drehfläche 42 synchronisiert werden kann, um zu verhindern, dass der Artikel 20 auf die Drehfläche 42 fällt. Der Körper 20 kann von der Drehfläche 42 aufgefangen und nach unten begleitet werden.

Dabei ist es von Vorteil, wenn im stromabwärts gelegenen Bereich der Förderstrecke 28a eine Lichtschranke angeordnet ist, um erfassen zu können, wann der Artikel 20 das stromabwärts gelegene Ende der Förderstrecke 28a passiert. Ebenfalls ist es von Vorteil, wenn man zuvor die Länge des Artikels 20 in Richtung der Längsachse der Förderstrecke 28a bestimmt hat. Damit liegt eine Information vor, wie tief die Drehstation 30 mindestens abgesenkt werden muss, um den Artikel 20 zu kippen, wie es in Fig. 5B durch einen Pfeil 66 angedeutet ist.

Anschließend wird die Drehfläche 42 wieder auf das Niveau der Förderstrecken 28a, 28b angehoben, wie es in Fig. 5C durch einen Pfeil 68 angedeutet ist. Der Artikel 20 kann dann zusätzlich auch noch gedreht werden (vergleiche Pfeil 31 in Fig. 5A) oder kann direkt an den Förderstreckenabschnitt 28b abgegeben werden, wie es schematisch durch eine Pfeil 70 in Fig. 5C angedeutet ist.

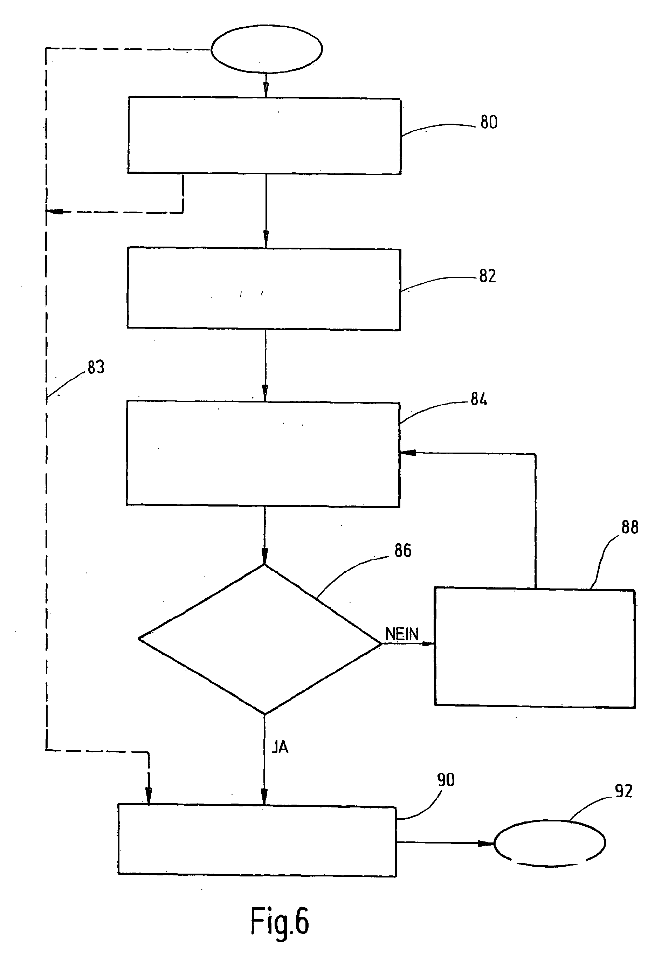

Bezug nehmend auf Fig. 6 ist das Verfahren gemäß der vorliegenden Erfindung schematisch in Form eines Flussdiagramms wiedergegeben.

Demgemäß werden die Artikel 20 auf der Drehfläche 42 der Drehstation 32 um eine Drehachse in eine gewünschte Winkelstellung gedreht, wobei die Drehachse senkrecht zu der Ebene der Fördertechnik 28 orientiert ist (Block 80).

Die gedrehten Artikel 20 werden anschließend gekippt, indem sie auf die Kippfläche 46 der Kippstation 32 von der Fördertechnik 28 abgegeben werden (Block 82). Die Kippfläche steht dabei in einer im Wesentlichen horizontalen Aufnahmestellung und wird dann um die Kippachse 48, die in der Ebene der Fördertechnik 28 liegt, in eine im Wesentlichen vertikale Kippstellung gebracht.

Wenn der Artikel 20 entweder nicht gekippt oder nicht gedreht werden muss, um gepackt zu werden, kann er die entsprechenden Stationen 30 bzw. 32 natürlich auch ohne Aktion durchlaufen (vgl. Strichlinie 83).

Die Greifeinrichtung 14 des Packroboters 12 nimmt den gekippten Artikel 20 auf (Block 84).

Optional kann überprüft werden, ob der Artikel bereits in seiner "richtigen" Kipplage ist (Block 86). Sollte der Artikel 20 noch nicht in der richtigen Lage sein, so kann er erneut an die Kippstation 32 abgegeben werden, deren Kippfläche 46 dazu zuvor wieder in die Aufnahmestellung zurückgekippt wurde (Block 88).

Befindet sich der Artikel bereits in der richtigen gekippten Lage, so kann er von der Greifeinrichtung 14 des Packroboters 12 auf den Versandträger 26 geladen werden (Block 90).

Der Packvorgang ist dann abgeschlossen (Block 92).

Es versteht sich, dass der Packroboter im Fall eines Versagens kurzzeitig auch durch einen Menschen ersetzt werden könnte. Um zu verhindern, dass ein Mensch unabsichtlich in den Wirkungsbereich gelangt, können entsprechende Lichtgitter um die Roboterzelle aufgebaut werden.

Alternativ zum bisher erläuterten Abkippen der Kippfläche 46 aus der Horizontalen nach "unten" in die Vertikale könnte die Kippfläche auch derart ausgebildet sein, dass die Kippfläche nach oben in die Vertikale aufgekippt wird. In diesem Fall liegt die Kippachse am stromabwärts gelegenen Ende der Kippfläche. Das stromaufwärts gelegene Ende der Kippfläche, welches an die Förderstrecke grenzt ist frei beweglich. So ist es möglich, dass die Greifeinrichtung 14 des Packroboters 12 bereits in ihre Aufnahmestellung verfahren werden kann, bevor der Artikel aufwärts gekippt wird. In der Aufnahmestellung grenzt die Greifeinrichtung an die Kippstation an, so dass der Artikel unmittelbar aus der Kippstellung aufgenommen werden kann. Dadurch verkürzt sich die Packzeit bedeutend. Der Packroboter muss nicht auf die Kippstation warten, bis er in seine Aufnahmestellung bewegt werden kann.

Ein weiterer Vorteil des Aufwärtskippens ist darin zu sehen, dass die Artikel nicht von der Kippfläche fallen können, da die Kippfläche als Stütze dient.

Unabhängig vom "Abkippen" oder "Aufkippen" kann die Kippstation 32 , vorzugsweise einzeln, angetriebene Rollen aufweisen, die in der Ebene der Kippfläche angeordnet sind. Mit diesen Rollen können Artikel erneut ausgerichtet werden, sollte es z.B. während des Transports von der Drehstation 30 zur Kippstation 32 dazu gekommen sein, dass sich der Artikel verdreht hat oder verrutscht ist. Ein derartiges Rollenfeld ist in der deutschen Patentanmeldung DE 10 2006 039 697 (Anmeldetag 21.08.2006) beschrieben.

Ein derartiges Rollenfeld kann optional auch bei der Drehstation 30 vorgesehen werden.

## Patentansprüche

1. System (10) zum Packen eines Artikels (20) auf einen Versandträger (26), welcher Artikel (20) in einer Kommissionieranlage auf einer Förderstrecke (28; 28a, 28b) stromabwärts in einer beliebigen Orientierung relativ zur Förderstrecke (28) zu einer Packstation (22) transportiert wird, die einen Packroboter (12) zur automatisierten Beladung des Versandträgers (26) aufweist, wobei der Artikel (20) mit einer beliebig vorgebbaren Seite (38) des Artikels (20) auf dem Versandträger (26) abzusetzen ist, mit:
einer Drehstation (30), die vorzugsweise innerhalb der Förderstrecke (28) vorgesehen ist und die die Förderstrecke (28) somit unterteilt, mit einer Drehfläche (42), die im Wesentlichen in einer Ebene der Förderstrecke (28) zur Aufnahme eines Artikels (20) von der Förderstrecke (28) angeordnet ist und die aus einer Aufnahmestellung um eine Achse senkrecht zu der Ebene der Förderstrecke (28) in eine Vielzahl von Abgabestellungen drehbar ist; und
einer Kippstation (32), die eine Kippfläche (46) aufweist, wobei die Kippfläche (46) in einer Aufnahmestellung im Wesentlichen parallel zur Ebene der Förderstrecke (28) ausgerichtet ist und in einer Kippstellung im Wesentlichen senkrecht zur Ebene der Förderstrecke (28) ausgerichtet ist,
**dadurch gekennzeichnet, dass** der Packroboter (12) eine Greifeinrichtung (14) aufweist,
wobei die Kippfläche (46) an einem stromabwärts gelegenen Ende einen Anschlag (50) aufweist, an den von der Förderstrecke (28) an die Kippstation (32) übergebene Artikel (20) anschlagen und der dazu geeignet ist, den übergebenen Artikel (20) in der Kippstellung zu tragen, und
wobei zumindest der Anschlag (50) wenigstens eine Aussparung derart aufweist, dass die Greifeinrichtung (14) des Packroboters (12), wenn sich die Kippfläche (46) in der Kippstellung befindet, unter den übergebenen Artikel (20) greifen kann, um diesen durch Anheben der Greifeinrichtung (14) zu übernehmen.

2. System nach Anspruch 1, wobei die Kippfläche (46) an einem stromaufwärts gelegenen Ende der Kippfläche eine Kippachse (48) aufweist, die parallel zu einem stromabwärts gelegenen Übergabeende der Förderstrecke (28) orientiert ist und die sich insbesondere an das Übergabeende anschließt.

3. System nach Anspruch 1, wobei auch die Kippfläche (46) wenigstens eine an die Greifeinrichtung (14) angepasste Aussparung aufweist.

4. System nach einem der vorhergehenden Ansprüche, wobei die wenigstens eine Aussparung mit der Greifeinrichtung (14) kämmt.

5. System nach einem der vorhergehenden Ansprüche, wobei die Kippstation (32) eine Hub- und Senkeinrichtung, insbesondere einen elektrisch oder hydraulisch betriebenen Zylinder, umfasst, um die Kippfläche (46) zwischen der Aufnahmestellung und der Kippstellung hin und her zu bewegen.

6. System nach einem der vorhergehenden Ansprüche, wobei die Drehstation (30) an ihrem stromabwärts gelegenen Ende einen Anschlag (40) aufweist.

7. System nach Anspruch 6, wobei der Anschlag (40) der Drehstation (30) gegenüber der Kippfläche (46) absenkbar ist.

8. System nach einem der vorhergehenden Ansprüche, wobei die Drehfläche (42) gegenüber der Ebene der Förderstrecke (28) angehoben (64) und abgesenkt (64) werden kann.

9. System nach einem der vorhergehenden Ansprüche, wobei die Drehstation (30) Fördermittel umfasst, um einen auf der Drehfläche (42) befindlichen Artikel (20) nach erfolgter Drehung (31) an einen stromabwärts gelegenen Teil (28b) der Förderstrecke (28) zu übergeben.

10. System nach einem der vorhergehenden Ansprüche, die ferner eine Überwachungseinrichtung (36) aufweist, die stromaufwärts relativ zur Drehstation (30) angeordnet ist, um die Lage eines zu packenden Artikels (20) zu erfassen und an eine übergeordnete Steuerungseinrichtung (37), insbesondere an einen Lagerverwaltungsrechner, zu übermitteln, die dazu geeignet ist, einen Dreh- und Kippvorgang zu berechnen, um den Artikel (20) auf seiner vordefinierten Stellfläche (38) auf den Versandträger (26) zu packen.

11. System nach einem der vorhergehenden Ansprüche, wobei die Drehstation (30) und die Kippstation (32) getrennt voneinander angeordnet sind.

12. Verfahren zum Packen eines Artikels (20) auf einen Versandträger (26), welcher Artikel (20) in einer Kommissionieranlage auf einer Förderstrecke (28) stromabwärts in einer beliebigen Orientierung relativ zur Förderstrecke (28) zu einer Packstation (22), die einen Packroboter (12) zur automatisierten Beladung des Versandträgers (26) mit dem Artikel (20) aufweist, transportiert wird, wobei der Artikel (20) mit einer beliebig vorgebbaren Seite (38) des Artikels auf dem Versandträger (26) abzusetzen ist, mit folgenden Schritten:
Wahlweises Drehen (80) des Artikels (20) auf einer Drehfläche (42) der Drehstation um eine Drehachse, die senkrecht zu einer Ebene der Fördertechnik (28) orientiert ist;
Wahlweises Kippen (82) des gedrehten Artikels (20) auf einer Kippfläche (46) aus einer im Wesentlichen horizontalen Aufnahmestellung um eine Kippachse (48), die in der Ebene der Fördertechnik (28) liegt, in eine im Wesentlichen vertikale Kippstellung; **gekennzeichnet durch** den folgenden Schritten : Aufnehmen (84) des gekippten Artikels (20) **durch** eine Greifeinrichtung (14) des Packroboters (12); und
Absetzten des Artikels (20) mit seiner vordefinierten Stellfläche (38) auf dem Versandträger (26),
wobei das Aufnehmen umfasst:
Untergreifen eines Anschlags (50) der Kippfläche (46), die zumindest eine Aussparung aufweist, mit einer Greifeinrichtung (14) des Packroboters (12), die mit der Aussparung kämmt; und
Anheben der Greifeinrichtung (14), um den Artikel (20) mit aufzunehmen und auf dem Versandträger (26) abzusetzen.

## Claims

1. A system (10) for packing articles (20) onto a shipping carrier (26), the article (20) being transported within an order-picking system on a conveyor line (28; 28a, 28b) downstream, having an arbitrary orientation relative to the conveyor line (28), towards a packing station (22), which comprises a packing robot (12) for automatically loading the shipping carrier (26), wherein the article (20) is to be put down on a face (38) of the article (20) onto the shipping carrier (26), which can be predetermined arbitrarily, comprising:
a rotating station (30), preferably provided within the conveyor line (28), and thus dividing the conveyor line (28), having a rotation area (42), which is substantially arranged in a plane of the conveyor line (28) for receiving an article (20) from the conveyor line (28), and rotatable from a receiving position about an axis perpendicular to the plane of the conveyor line (28) into a plurality of delivery positions; and
a tilting station (32) comprising a tilt area (46), wherein the tilt area (46) in a receiving position is substantially orientated parallel with respect to the plane of the conveyor line (28), and in a tilting position is substantially orientated perpendicular to the plane of the conveyor line (28), **characterized in that**
the packing robot (12) comprises a grab device (14), wherein the tilt area (46) comprises a stopper (50) at a downstream located end, against which articles (20), which are handed over from the conveyor line (28) to the tilting station (32), abut, and is suitable to support the handed-over article (20) in the tilting position, and wherein at least the stopper (50) comprises at least one recess such that the grab device (14) of the packing robot (12), if the tilt area (46) is in the tilting position, can reach beneath the handed-over article (20) for taking over same by lifting the grab device (14).

2. The system of claim 1, wherein the tilt area (46) comprises at an upstream located end of the tilt area a tilting axis (48), which is orientated parallel relative to a downstream located handing-over end of the conveyor line (28), and particularly follows the handing-over end.

3. The system of claim 1, wherein the tilt area (46) comprises at least one recess being adapted to the grab device (14).

4. The system of any one of the proceeding claims, wherein the at least one recess meshes with the grab device (14).

5. The system of any of the proceeding claims, wherein the tilting station (32) comprises a lifting and lowering device, particularly an electrically or hydraulically operated cylinder, in order to reciprocate the tilt area (46) between the receiving position and the tilting position.

6. The system of any of the proceeding claims, wherein the rotating station (30) comprises a stopper (40) at the downstream located end thereof.

7. The system of claim 6, wherein the stopper (40) of the rotating station (30) can be lowered relative to the tilt area (46).

8. The system of any of the proceeding claims, wherein the rotation area (42) can be lifted (64) and lowered (64) relative to the plane of the conveyor line (28).

9. The system of any of the proceeding claims, wherein the rotating station (30) comprises a conveyor for handing over an article (20) located on the rotation area (42), after a rotation (31) has been performed, towards a part (28b) of the conveyor line (28) being located downstream.

10. The system of any of the proceeding claims, further comprising a monitoring device (36) being arranged upstream relative to the rotating station (30) for detecting the position of an article (20) to be packed, and transmitting to a superordinated control device (37), particularly a warehouse management computer, which is suitable for calculating a rotating and tilting process, in order to pack the article (20) on its predefined standing face (38) onto the shipping carrier (26).

11. The system of any of the proceeding claims, wherein die rotating station (30) and the tilting station (32) are arranged separately to each other.

12. A method for packing an article (20) on a shipping carrier (26), the article (20) being transported within an order-picking system on a conveyor line (28) downstream having an arbitrary orientation relative to the conveyor line (28) towards a packing station (22) comprising a packing robot (12) for automatically loading the shipping carrier (26) with the article (20), wherein the article (20) is to be put down on the shipping carrier (26) with a face (38) of the article, which can be predetermined arbitrarily, comprising the steps of:
selectively rotating (80) the article (20) on a rotation area (42) of the rotating station about a rotating axis orientated perpendicularly to a plane of the conveyor (28);
selectively tilting (82) the rotated article (20) on a tilt area (46) from a substantially horizontal receiving position about a tilting axis (48) being in the plane of the conveyor (28) into a substantially vertical tilting position **characterized by** the steps of:
receiving (84) the tilted article (20) by means of a grab device (14) of the packing robot (12); and
putting-down the article (20) with the predefined standing face (38) thereof on the shipping carrier (26),
wherein the step of receiving comprises:
reaching beneath a stopper (50) of the tilt area (46), which at least comprises a recess, by means of a grab device (14) of the packing robot (12) meshing with the recess; and
lifting the grab device (14) for taking the article (20) and putting down on the shipping carrier (26).

## Revendications

1. Système (10) pour emballer un article (20) sur un support d'expédition (26), article (20) qui est transporté dans une installation de préparation de commandes sur une voie de transport (28; 28a, 28b) vers l'aval dans une orientation quelconque par rapport à la voie de transport (28) jusqu'à une station d'emballage (22), qui comporte un robot d'emballage (12) pour le chargement automatisé du support d'expédition (26), dans lequel l'article (20) doit être déposé sur le support d'expédition (26) avec une face librement déterminable (38) de l'article (20), avec:
une station tournante (30), qui est prévue de préférence à l'intérieur de la voie de transport (28) et qui subdivise ainsi la voie de transport (28), avec une surface tournante (42), qui est disposée essentiellement dans un plan de la voie de transport (28) en vue de recevoir un article (20) de la voie de transport (28) et qui peut tourner à partir d'une position de réception, autour d'un axe perpendiculaire au plan de la voie de transport (28), jusqu'à une multiplicité de positions de remise; et
un poste de basculement (32), qui présente une surface basculante (46), dans lequel la surface basculante (46) est orientée, dans une position de réception, essentiellement parallèlement au plan de la voie de transport (28) et est orientée, dans une position de basculement, essentiellement perpendiculairement au plan de la voie de transport (28), **caractérisé en ce que** le robot d'emballage (12) présente un dispositif de saisie (14), dans lequel la surface basculante (46) présente, à une extrémité située en aval, une butée (50) sur laquelle viennent buter des articles (20) transférés de la voie de transport (28) au poste de basculement (32) et qui est apte à porter les articles transférés (20) dans la position basculée, et dans lequel au moins la butée (50) présente au moins une découpe, de telle manière que le dispositif de saisie (14) du robot d'emballage (12), lorsque la surface basculante (46) se trouve dans la position basculée, puisse saisir l'article transmis (20) par dessous, afin de reprendre celui-ci par soulèvement du dispositif de saisie (14).

2. Système selon la revendication 1, dans lequel la surface basculante (46) présente, à une extrémité de la surface basculante située en amont, un axe de basculement (48), qui est orienté parallèlement à une extrémité de transfert de la voie de transport (28) située en aval et qui se raccorde en particulier à l'extrémité de transfert.

3. Système selon la revendication 1, dans lequel la surface basculante (46) présente également au moins une découpe adaptée au dispositif de saisie (14).

4. Système selon l'une quelconque des revendications précédentes, dans lequel ladite au moins une découpe s'engage avec le dispositif de saisie (14).

5. Système selon l'une quelconque des revendications précédentes, dans lequel le poste de basculement (32) comprend un dispositif de montée et de descente, en particulier un cylindre à commande électrique ou hydraulique, pour déplacer la surface basculante (46) entre la position de réception et la position basculée et inversement.

6. Système selon l'une quelconque des revendications précédentes, dans lequel la station tournante (30) présente une butée (40) à son extrémité située vers l'aval.

7. Système selon la revendication 6, dans lequel la butée (40) de la station tournante (30) peut être abaissée par rapport à la surface basculante (46).

8. Système selon l'une quelconque des revendications précédentes, dans lequel la surface tournante (42) peut être soulevée (64) et abaissée (64) par rapport au plan de la voie de transport (28).

9. Système selon l'une quelconque des revendications précédentes, dans lequel la station tournante (30) comprend des moyens de transport, destinés à transférer un article (20) se trouvant sur la surface tournante (42), après avoir effectué une rotation (31), une partie située en aval (28b) de la voie de transport (28).

10. Système selon l'une quelconque des revendications précédentes, qui comprend en outre un dispositif de surveillance (36), qui est disposé en amont par rapport à la station tournante (30), destiné à détecter la position d'un article à emballer (20) et à la communiquer à un dispositif de commande prioritaire (37), en particulier un ordinateur de gestion de stock, qui est apte à calculer une opération de rotation et de basculement pour emballer l'article (20) sur sa surface de pose (38) sur le support d'expédition (26).

11. Système selon l'une quelconque des revendications précédentes, dans lequel la station tournante (30) et le poste de basculement (32) sont disposés séparément l'un de l'autre.

12. Procédé pour emballer un article (20) sur un support d'expédition (26), article (20) qui est transporté dans une installation de préparation de commandes sur une voie de transport (28) vers l'aval dans une orientation quelconque par rapport à la voie de transport (28) jusqu'à une station d'emballage (22), qui comporte un robot d'emballage (12) pour le chargement automatisé du support d'expédition (26) avec l'article (20), dans lequel l'article (20) doit être déposé sur le support d'expédition (26) avec une face librement pré-déterminable (38), comprenant les étapes suivantes:
rotation au choix (80) de l'article (20) sur une surface tournante (42) de la station tournante autour d'un axe de rotation, qui est orienté perpendiculairement à un plan du mécanisme de transport (28);
basculement au choix (82) de l'article tourné (20) sur une surface basculante (46) d'une position de réception essentiellement horizontale, autour d'un axe de basculement (48) qui est situé dans le plan du mécanisme de transport (28), à une position basculée essentiellement verticale,
**caractérisé par** les étapes suivantes:
reprise (84) de l'article basculé (20) par un dispositif de saisie (14) du robot d'emballage (12); et
dépôt de l'article (20) avec sa face de pose prédéterminée (38) sur le support d'expédition (26),
dans lequel la reprise comprend:
saisie sous une butée (50) de la surface basculante (46), qui présente au moins une découpe, avec un dispositif de saisie (14) du robot d'emballage (12), qui s'engage avec la découpe; et
soulèvement du dispositif de saisie (14), afin d'emporter l'article (20) et de le déposer sur le support d'expédition (26).
